# EUROPÄISCHE PATENTANMELDUNG

(11) **EP 2 149 476 A2**
(43) Veröffentlichungstag der Anmeldung: **03.02.2010**
(21) Anmeldenummer: 09166607.3
(22) Anmeldetag: 28.07.2009
(51) Int. Cl.: B60Q 1/30

(54) **Verfahren und Vorrichtung zur Erkennung eines Anhängers oder Auflegers an einem Kraftfahrzeug**

(30) Priorität: 01.08.2008 DE 102008035885
(71) Anmelder: ASPÖCK Systems GmbH, 4722 Peuerbach (AT)
(72) Erfinder: Steiner, Erwin, 4722, Peuerbach (AT); Humberger, Daniel, 4723, Natternbach (AT)
(74) Vertreter: Gustorf, Gerhard

(57) **Zusammenfassung**

Gegenstand der Erfindung sind ein Verfahren und eine Vorrichtung zur Erkennung eines Anhängers oder Auflegers (A) an einem Zugfahrzeug (T) mittels eines Prüfsignals (P), das vom Zugfahrzeug (T) über eine elektrische Verbindungsleitung (V) zu einer Lichtfunktion des Anhängers oder Auflegers (A) im ausgeschalteten Zustand geleitet wird, wonach der Strom oder die Spannung des Prüfsignals (P) in der Lichtfunktion gemessen wird, wobei bei Verwendung eines Leuchtkörpers (G) in der Lichtfunktion, der eine geringere Stromaufnahme und einen höheren Eingangswiderstand als eine konventionelle Glühlampe hat, ein in die Verbindungsleitung (V) geschalteter Vergleicherkreis (C) die Spannung des Zugfahrzeugs (T) aufnimmt und vergleicht, ob in der Verbindungsleitung (V) ein Prüfsignal (P) oder ein Leistungssignal (B) zu dem Leuchtkörper (G) vorhanden ist, wobei der Vergleicherkreis (C) den Stromfluß über einen Kurzschluss gegen Masse (M) ableitet, wenn er ein Prüfsignal (P) feststellt, während er bei einem Leistungssignal (B) den Kurzschluss abschaltet.

## Beschreibung

Die Erfindung betrifft ein Verfahren zur Erkennung eines Anhängers oder Auflegers an einem Zugfahrzeug mittels eines Prüfsignals, das vom Zugfahrzeug über eine elektrische Verbindungsleitung zu einer Lichtfunktion des Anhängers oder Auflegers im ausgeschalteten Zustand geleitet wird, wonach der Strom oder die Spannung des Prüfsignals in der Lichtfunktion gemessen wird.

Ferner hat die Erfindung eine Vorrichtung zur Durchführung des Verfahrens zum Gegenstand, bei der eine elektrische Verbindungsleitung vom Zugfahrzeug zu der Lichtfunktion des Anhängers oder Auflegers führt.

Viele Zugfahrzeug-Hersteller kontrollieren mittels Lichtfunktionen wie Blinker, Bremslicht, Rücklicht usw., ob ein Anhänger angeschlossen ist oder nicht. Dies wird meistens mittels Prüfspannungen (niedrige Spannung und/oder niedriger Strom) durchgeführt, die bisher von einer Glühbirne ohne zu leuchten kurzgeschlossen wurden. Bei Einsatz einer LED-Beleuchtung kann dies aber zu Problemen führen, da entweder die LEDs zu glimmen beginnen und/oder der Anhänger vom Zugfahrzeug nicht erkannt wird, da die LEDs diese Prüfspannungen nicht mehr vollständig kurzschließen.

Wird ein Anhänger vom Zugfahrzeug nicht erkannt, so kann dies sehr erhebliche Folgen nach sich ziehen, im schlimmsten Fall kann dies Einbußen beim Anhänger-ABS haben oder es kann passieren, dass dem Anhänger keine Spannung an den Lichtfunktionen zur Verfügung gestellt wird.

Ein Großteil der Hersteller von Zugfahrzeugen stattet ihre Fahrzeuge mit einer Anhängererkennung aus, um zwischen dem Betrieb mit und ohne Anhänger unterscheiden und dementsprechende Handlungen setzen zu können. Für die Zugfahrzeuge ist diese Information sehr wesentlich, werden doch oftmals von den Bremssystemen im Anhängerbetrieb unterschiedliche Brems-Strategien gewählt, um z.B. das Einknicken eines Fahrzeuges mit Anhänger zu verhindern. Außerdem werden oftmals auch die Verbindungssteckdosen, wie zum Beispiel für die Lichtanlage, zum Schutz vor Korrosion spannungsfrei geschaltet, wenn kein Anhänger vorgefunden oder erkannt wurde.

Die Realisierung einer Anhängererkennung kann sehr unterschiedlich sein. In DE 197 44 066 B4 wird dies für Nutzfahrzeuge beispielsweise über die Druckluftleitungen vorgeschlagen.

Eine einfachere und darum verbreitete Anhängererkennung erfolgt jedoch über die Lichtfunktionen des Anhängers. Zu diesen Lichtfunktionen gehören beispielsweise die Blinker, das Rücklicht, das Bremslicht, das Rückfahrlicht oder das Nebelschlusslicht. Dabei werden von den Zugfahrzeugen über die elektrische Steckverbindung zwischen Zugfahrzeug und Anhänger Prüfsignale zu den Leuchtmitteln am Anhänger aufgeschaltet und Messungen durchgeführt.

In DE 100 23 326 A1 wird dies beispielsweise aus der Sicht des Zugfahrzeuges nach dem Anfahren über das fahrerunabhängige Ansteuern des Bremslichtes und anschließendes Messen des Stromes gelöst.

Da das Verfahren der Anhängererkennung nicht standardisiert ist, sind die Prüfspannungen und Prüfströme sowie die dazu verwendeten Lichtfunktionen und auch die Zeitpunkte, wann diese Prüfspannungen aufgeschaltet werden, fast so unterschiedlich wie es auch Hersteller von Zugfahrzeugen gibt. Das Grundprinzip ist jedoch fast immer gleich. Vom Zugfahrzeug werden über die elektrische Verbindung zum Anhänger Prüfsignale wie beispielsweise eine Spannung, die niedriger als die Betriebsspannung ist, oder Spannungen mit begrenztem Strom oder die Betriebsspannung für eine sehr kurze Zeit im ausgeschalteten Zustand, kurz vor dem Einschalten oder kurz nach dem Ausschalten einer Lichtfunktion aufgeschaltet und Messungen durchgeführt.

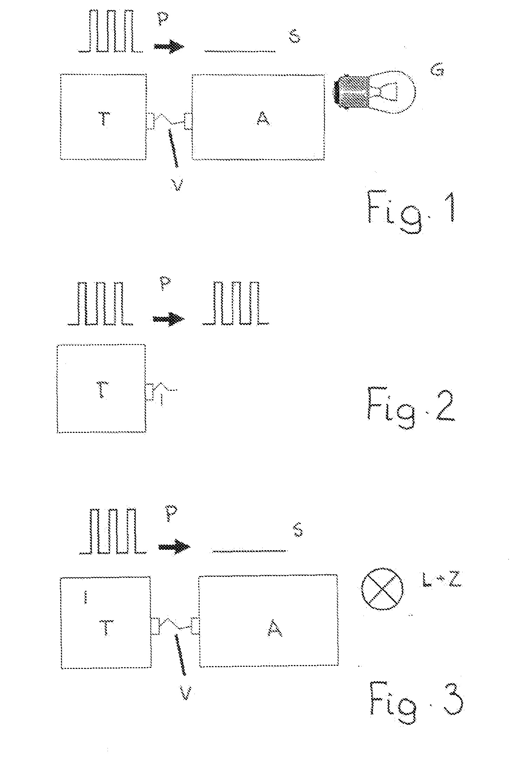

Das erwartete Messergebnis ist oftmals noch auf den Betrieb mit Glühlampen am Anhänger A eines Zugfahrzeugs T ausgelegt, das heißt bei einem Anhänger A mit Glühlampen G werden diese Prüfspannungen P durch den Glühfaden der Glühlampe G sehr niederohmig gegen Masse abgeleitet - ähnlich einem Kurzschluss, vergleiche dazu Figur 1 -, während bei nicht Vorhandensein eines Anhängers und somit auch bei nicht Vorhandensein einer Glühlampe G die Prüfspannungen P unverändert bleiben, was in Figur 2 angedeutet ist.

Diese Mess- und Prüfverfahren sind jedoch bei Lichtfunktionen mit modernen Leuchtkörpern wie beispielsweise einer LED-Beleuchtung nicht möglicht, da diese nicht den typischen Zustand "Kurzschluss gegen Masse" oder keinen ausreichend niedrigen Eingangswiderstand aufweisen.

Außerdem benötigen moderne Leuchtmittel viel weniger Spannung und/oder Strom, um Licht zu erzeugen. Während die Prüfspannungen bei einer Glühlampe nahezu keine Wirkung haben, können sie bei modernen Leuchtmitteln zum Flackern oder Glimmen führen.

Es ist daher notwendig, den Eingangswiderstand eines modernen Leuchtmittels im ausgeschalteten Zustand der Lichtfunktion sehr niedrig zu halten (ähnlich dem niederohmigen Kurzschluss eines Glühfadens in der Glühlampe).

In EP 1 653 782 A2 wird dies beispielsweise mittels eines geschlossenen Relais gelöst, das kurz nach dem Einschalten der Lichtfunktion geöffnet wird, um dessen Zerstörung zu verhindern. Kurzzeitig ist das Relais jedoch einem hohen Strom ausgesetzt, was entweder zur Folge hat, dass im Vergleich zu den Prüfspannungen ein sehr teures und leistungsstarkes Relais verwendet werden muss oder das Relais kurzzeitig überlastet wird, was sich wiederum negativ auf die Lebensdauer auswirkt. Außerdem haben Relais grundsätzlich die negative Eigenschaft, nur eine gewisse Anzahl an Schaltzyklen zu garantieren, was bei der Lichtfunktion eines Blinkers, der sehr oft ein- und ausgeschaltet wird, sehr negativ ist.

Der Erfindung liegt die Aufgabe zugrunde, hier Abhilfe zu schaffen und ein Verfahren und eine Vorrichtung anzugeben, mit deren Hilfe es möglich ist, mittels eines Prüfsignals auch einen Anhänger oder Aufleger zu erkennen, der mit modernen Leuchtkörpern ausgerüstet ist, z.B. mit LEDs.

Die Lösung dieser Aufgabe ergibt sich aus den Patentansprüchen 1 bzw. 2. Vorteilhafte Weiterbildungen sind Gegenstand der Unteransprüche.

Die Erfindung ist nachstehend anhand der Zeichnung näher erläutert. In dieser zeigen:
Figur 1 die bereits erläuterte Situation des Standes der Technik bei einem Anhänger mit Glühlampe,
Figur 2 eine der Figur 1 entsprechende Darstellung ohne Anhänger,
Figur 3 die schematische Darstellung der Erfindung mit einem Anhänger mit modernen Leuchtkörpern in den Lichtfunktionen und der Zusatzschaltung,
Figur 4 die erfindungsgemäß ausgebildete Schaltung während der Prüfung mittels eines Prüfsignals,
Figur 5 eine der Figur 4 entsprechende Darstellung während des Betriebs nach der Prüfung mit einem Leistungssignal (Lichtfunktion eingeschaltet) und

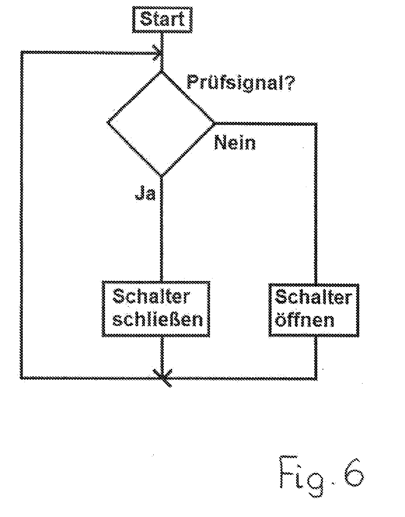

Figur 6 das Ablaufdiagramm einer Prüfung gemäß der Erfindung.

In den Figuren 1 bis 5 bedeuten:
- T: Zugfahrzeug
- A: Anhänger oder Aufleger
- V: Verbindungsleitung
- M: Masse
- G: Glühlampe
- L: LED
- P: Prüfsignal
- S: Ausgangssignal
- B: Betriebs- oder Leistungssignal
- Z: Zusatzschaltung
- C: Vergleicherkreis (Comparator)
- K: Kurzschlussleitung
- E: Schalter
- R: Widerstand

In Figur 3 ist dargestellt, dass auch bei einem Anhänger A mit LED-Leuchtkörpern L und der Zusatzschaltung Z anstelle von Glühlampen G über das Prüfsignal P ein Anhänger A dadurch erkannt wird, dass das Ausgangssignal S den Wert 0 hat (0 Volt oder 0 Ampere).

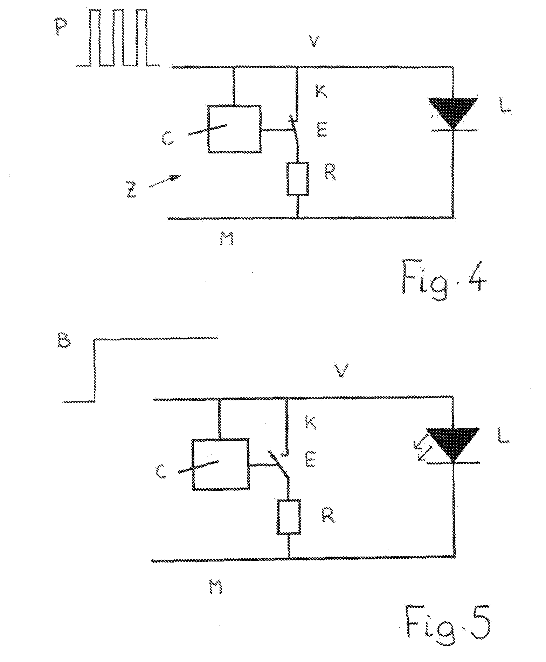

Mittels einer einfachen, in den Figuren 4 und 5 gezeigten Schaltung wird erreicht, dass sich das Leuchtmittel mit der Zusatzschaltung Z im ausgeschalteten Zustand der Lichtfunktion wie eine Glühlampe verhält. Dabei werden Prüfspannungen P zur Erkennung des Anhängers A gegen Masse M abgeleitet. Nach dem Einschalten der Lichtfunktion wird der Kurzschluss wieder geöffnet.

Die Figuren 4 und 5 zeigen hierzu den grundsätzlichen Schaltungsaufbau mit einer erfindungsgemäß vorgesehenen Zusatzschaltung Z und einem Vergleicherkreis V.

Da das Auftreten der Prüfsignale P unterschiedlich ist, muss die Schaltung ständig in Bereitschaft sein. Daher wird die Zusatzschaltung Z direkt in die Verbindungsleitung V der jeweiligen Lichtfunktion angeschlossen. Die Schaltung ist mit einem Vergleicherkreis C ausgestattet, der die Spannungen des Zugfahrzeuges T aufnimmt und vergleicht, ob ein Prüfsignal P vorliegt oder die Lichtfunktion eingeschaltet werden soll und somit eine Spannung mit Leistung vorhanden ist (Betriebsspannung B oder Leistungssignal). Die Prüfsignale P werden zur erfolgreichen Anhängererkennung, d.h. bevor sie zum Leuchtmittel L gelangen und Störungen wie Flimmern, Glimmen oder Flackern verursachen können, niederohmig gegen Masse M abgeleitet.

Dazu wird ein Schalter E verwendet, der bei Vorfinden von Prüfsignalen P die Verbindungsleitung V entweder direkt oder über einen sehr niedrigen Widerstand R mit Masse M verbindet (Figur 4). Bei Vorhandensein von Leistungssignalen B erkennt dies der Vergleicherkreis V, schaltet den niederohmigen oder direkten Kurzschluss ab und lässt die Spannung zum Leuchtmittel L durch.

Der Schalter E kann ein Transistor oder ein MOS-FET o. dgl. sein. Der Vergleicherkreis V kann aus einer analogen oder einer digitalen Schaltung mit einem u-Prozessor bestehen.

Die Erfindung hat den Vorteil, trotz der großen Vielfalt an Prüfsignalen nur eine elektronische Schaltung zu benötigen. Die Schaltung erzeugt außerdem im Gegensatz zu einem permanenten niedrigen Eingangswiderstand ohne elektronische Ansteuerung kaum Verlustleistung, z.B. Hitze, so dass sie in moderne Leuchtmittel integriert werden kann.

Ferner reagiert die Schaltung sehr schnell, so dass sie beim Umschalten vom Prüfsignal P auf die Betriebspannung B (Lichtfunktion wird eingeschaltet) keinen Schaden nimmt bzw. umgekehrt beim Umschalten von der Betriebsspannung zum Prüfsignal (Lichtfunktion wird ausgeschaltet) schnell genug wieder die Simulation einer Glühlampe im ausgeschalteten Zustand aufnimmt.

## Patentansprüche

1. Verfahren zur Erkennung eines Anhängers oder Auflegers an einem Zugfahrzeug mittels eines Prüfsignals, das vom Zugfahrzeug über eine elektrische Verbindungsleitung zu einer Lichtfunktion des Anhängers oder Auflegers im ausgeschalteten Zustand geleitet wird, wonach der Strom oder die Spannung des Prüfsignals in der Lichtfunktion gemessen wird, **dadurch gekennzeichnet, dass** bei Verwendung eines Leuchtkörpers in der Lichtfunktion, der eine geringere Stromaufnahme und einen höheren Eingangswiderstand als eine konventionelle Glühlampe hat, ein in die Verbindungsleitung geschalteter Vergleicherkreis die Spannung des Zugfahrzeugs aufnimmt und vergleicht, ob in der Verbindungsleitung ein Prüfsignal oder ein Leistungssignal zu dem Leuchtkörper vorhanden ist, wobei der Vergleicherkreis den Stromfluß über einen Kurzschluss gegen Masse ableitet, wenn er ein Prüfsignal feststellt, während er bei einem Leistungssignal den Kurzschluss abschaltet.

2. Vorrichtung zur Durchführung des Verfahrens nach Anspruch 1, umfassend eine elektrische Verbindungsleitung vom Zugfahrzeug zu der Lichtfunktion des Anhängers oder Auflegers, **dadurch gekennzeichnet, dass** in die Verbindungsleitung (V) ein Vergleicherkreis (C) geschaltet ist, der über einen Schalter (E) mit einer die Verbindungsleitung (V) gegen Masse (M) schaltenden Kurzschlussleitung (K) verbunden ist, wobei der Schalter (E) bei Betriebsspannung für den Leuchtkörper (L) öffnet und bei Prüfspannung (P) die Kurzschlussleitung schließt.

3. Vorrichtung nach Anspruch 2, **dadurch gekennzeichnet, dass** in die Kurzschlussleitung (K) in Reihe mit dem Schalter (E) in Widerstand (R) geschaltet ist.

4. Vorrichtung nach Anspruch 2 oder 3, **dadurch gekennzeichnet, dass** der Vergleicherkreis (V) aus einer analogen oder einer digitalen Schaltung mit einem u-Prozessor besteht.

5. Vorrichtung nach einem der Ansprüche 2 bis 4, **dadurch gekennzeichnet, dass** der Schalter (E) aus einem Transistor besteht.

6. Vorrichtung nach Anspruch 5, **dadurch gekennzeichnet, dass** der Schalter (E) aus einem MOS-FET besteht.
